# EUROPEAN PATENT SPECIFICATION

(11) **EP 3 687 013 B1**
(45) Date of publication and mention of the grant of the patent: **13.03.2024**
(21) Application number: 20153047.4
(22) Date of filing: 22.01.2020
(51) Int. Cl.: H02G 3/04, H02G 3/06

(54) **ARTICULATED JOINT FOR CABLE DUCTS**
GELENKVERBINDUNG FÜR KABELKANÄLE
JOINT ARTICULÉ POUR GOULOTTES DE CÂBLES

(30) Priority: 22.01.2019 IT 201900000943
(43) Date of publication of application: 29.07.2020
(73) Proprietor: BTICINO S.P.A., 21100 Varese, (IT)
(72) Inventor: VANETTI, Stefano, I-21010 MONTEGRINO VALTRAVAGLIA (Varese) (IT); ANDOLFO, Claudio, I-15066 GAVI (Alessandria) (IT)
(74) Representative: Deambrogi, Edgardo

(56) References cited:
- DE-U1-202017 105 244
- ES-U- 1 196 339
- US-A- 4 905 362
- US-A1- 2005 029 393
- US-A1- 2010 086 348
- Marco Marco Cable Management: "MCSSC Fast Fix Side Coupler Data Sheet", , 17 October 2013 (2013-10-17), XP055627488, Retrieved from the Internet: URL:https://www.mylights.co.uk/images/pdf/ Side%20Coupler.pdf [retrieved on 2019-10-01]

## Description

The present invention concerns in general cable ductings and more specifically a joint for a cable ducting according to the preamble of claim 1 and a method for making such a joint according to the preamble of claim 8.

In order to house and protect cables, in particular electrical cables, the use of cable carrying systems comprising a plurality of duct segments connected in series by head-to-head junctions is well known. Each cable duct segment comprises a bottom wall and a pair of side walls that extend perpendicular to the bottom wall in a manner whereby the duct has an essentially U-shaped cross-section that is adapted to contain bundles of electrical cables. The walls may be closed or perforated and, if necessary, a cover is provided to close the housing volume of the cable bundles. Although a ducting system is traditionally identified as a 'duct' if the cable housing volume is closed by a cover, while assuming the more appropriate name of 'tray' when it comes to an open cable carrying system, in the following text, the generic term 'duct' will for simplicity be adopted for both embodiments.

The duct segments generally extend along straight lines, except for those segments that serve as angular connectors and extend along curved lines. A ducting may also extend over a plane or several planes, in which case plane variations are obtained by connecting flat duct segments with inclined, downward or upward duct segments, seamlessly connected by means of path accessories or articulated joints to allow free vertical inclinations.

The assembly of two consecutive cable duct segments lying on incident planes is generally carried out by juxtaposition and subsequent connection of end portions of these segments, using articulated joints typically formed of plate, flat or square elements which are rotatably fixed to each other by a third pivot element.

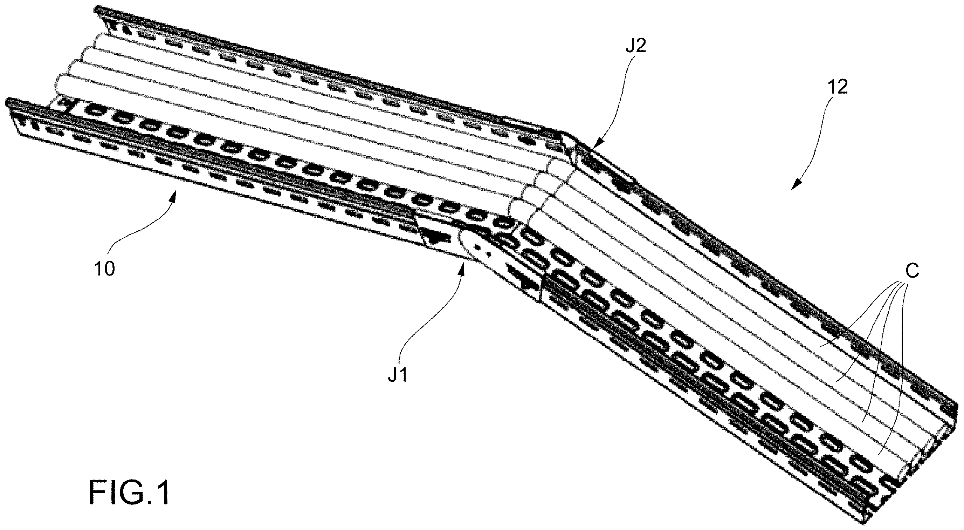

A representation of a cable ducting section comprising two adjacent duct segments forming a plane variation, joined by means of known joints, is provided in Figure 1. In the figure, the duct segments are indicated at 10 and 12, respectively, and a convex plane variation or downward curve is shown. At J1 and J2 are indicated the articulated joints coupled to the respective side walls of duct segments 10 and 12. The figure shows an operating condition wherein a plurality of cables C are arranged in the duct housing space.

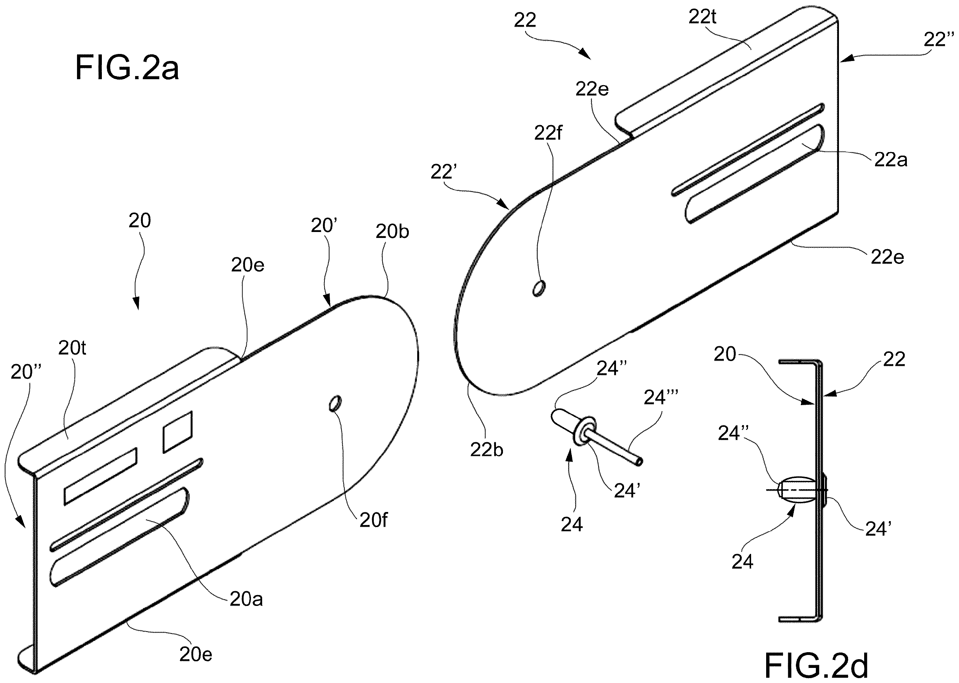

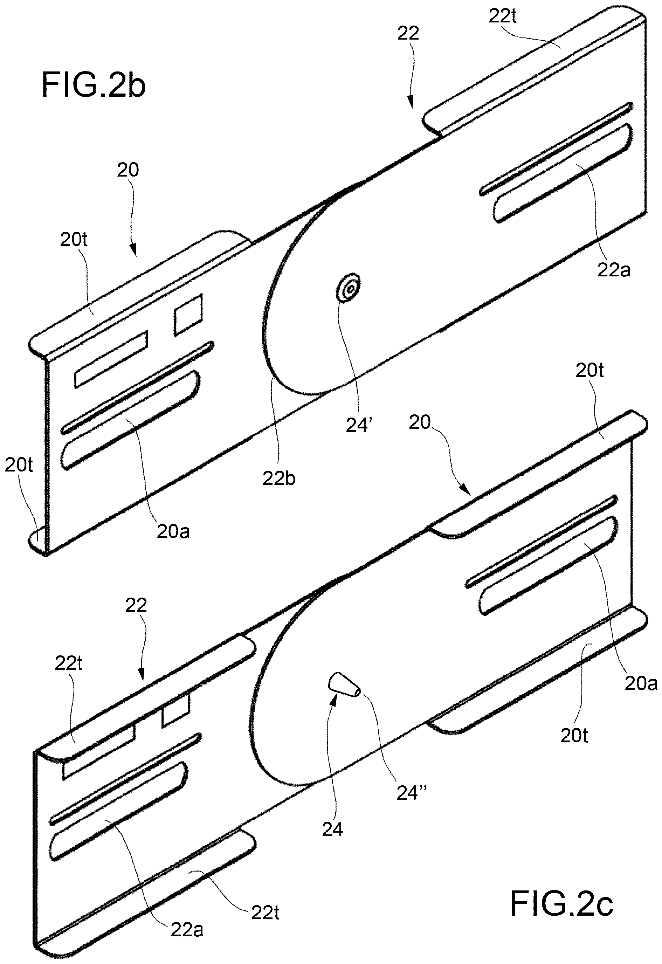

Figures 2a-2d show details of the articulated joint. The joint comprises a first plate element 20 adapted to be operatively coupled to an end portion of a first cable duct and a second plate element 22 adapted to be operatively coupled to an end portion of a second cable duct facing said first duct along a predetermined ducting direction. Figure 2a shows the first and second plate element 20, 22 separately in an exploded configuration. Both plate elements have a head portion 20', 22' with a rounded transverse edge 20b, 22b and a through hole 20f, 22f and a tail portion 20", 22" having means for fixing to a cable duct such as an elongated slot 20a, 22a for coupling the element to a side wall of a respective cable duct by removable fixing means such as bolts or the like.

Moreover, each plate element 20, 22 comprises a pair of tabs 20t, 22t extending from at least one part of opposite longitudinal edges 20e, 22e of the element and folded orthogonally to the surface of the element, these tabs being adapted to engage with a side wall or the bottom wall of the end portion of a respective duct segment 10, 12.

The through hole 20f, 22f is formed along a longitudinal center line axis of the first and second plate element 20, 22, respectively.

Through each through hole 20f, 22f is disposed a pin 24 or similar hinge element such as a rivet, for example, a blind rivet, having axial extension transverse to the housing space of the duct where the plurality of cables is arranged in the mounted condition. The rivet pin generally includes a collar 24' having radial extension greater than the radius of the through hole 20f, 22f, i.e. the collar has an extension greater than that of the through hole, whereby it prevents the pin from sliding axially through the through hole so long as to emerge in a first direction. The rivet pin includes downstream of the collar 24' a free end 24" which is deformable, for example, by riveting or by pulling a sacrificial dowel 24‴, so as to form a radially extended flange overlapping an edge of said through hole and keeping the pin from sliding axially through the through hole so long as to come out in a second direction opposite to the first direction. This condition is well highlighted in Figure 2d.

By means of the pin 24 or a similar hinge element, the first plate element 20 and the second plate element 22 are coupled together rotatably on parallel planes.

However, disadvantageously, the pin 24 or similar hinge element emerges transversely with respect to the surfaces of the plate elements of the joint and, in particular, it emerges significantly into the cable housing space, as is clearly shown in Figure 2c, constituting an obstacle to the arrangement or sliding - where required - of the cables and an element that could cause damage thereto, for example by tearing the sheath, with problems of outages and safety. A further safety problem due to the presence of the pin concerns an operator who must intervene in the cable housing space and could be injured.

DE 20 2017 105244 and US 2005/029393 describe cable carrier chains with angular stops integrated in the articulated connections, wherein the articulated connections are formed by the penetration of a convex contour pin within a seat of which the contour defines a plurality of lobes or recesses that constitute seats for stopping the rotation of the pin. In no case does the pin have a radially extended flange at least partially overlapping an edge of the seat. ES 1 196 339 U discloses a device for the angled connection of cable trays, comprising a first piece and a second piece, each one presenting a joining end to join the first and the second piece together, the joining ends being formed so that the first and second pieces can rotate one relative to the other about an axis of rotation, wherein the joining end of the first piece comprises a lug extending in an axial direction, coaxial with the axis of rotation and provided with at least a retaining flap extending laterally with respect to the axial direction, and wherein the joining end of the second piece comprises an opening and a retaining surface cooperating with said at least one retaining flap in an angled arrangement of the first and second pieces, thus preventing relative movement between the first and second pieces in the axial direction.

The object of the present invention is thus to provide a satisfactory solution to the problems described above, avoiding the drawbacks of the prior art. In particular, the object of the present invention is to create a joint for a cable ducting that does not constitute an obstacle to the cables housed in the duct or to an operator intervening in the duct and that does not endanger the integrity of the duct and the contents thereof or the safety of an operator.

A further object of the invention is to provide a joint for a cable ducting that is easy and economical to fabricate and easy to install.

According to the present invention these objects are achieved by means of a joint for a cable ducting having the features claimed in claim 1.

A further subject-matter of the invention is a method for the fabrication of a joint for a cable ducting according to claim 8.

Particular embodiments are the subject-matter of the dependent claims, the content of which is to be understood as an integral part of the present description.

In short, the present invention is based on the principle of making the hinge element of the joint integral with one of the two plate elements, so that the joint is made with the minimum number of parts, i.e. the two plate elements themselves. Furthermore, according to the invention, the hinge element of the joint is made as a formation protruding from only one face of the respective plate element with which it is obtained integrally, preferably in such a way that it emerges through the through hole of the other plate element from the opposite side of the second element for the minimum distance to be riveted to form a radially extended flange at least partially overlapping an edge of said through hole, so as to hold the plate elements transversely in a stable coupling condition.

According to the invention, a joint is obtained that has a surface without protuberance at the hinged element, which is intended to be facing the housing space of the duct, and a surface that has a minimum protuberance at the hinged element, which consists of the riveting flange, which is intended to face the outside of the duct.

Further characteristics and advantages of the invention will be described in greater detail in the following detailed description of an embodiment thereof, provided by way of non-limiting example, with reference to the accompanying drawings wherein:
Figure 1 is a perspective view of part of a cable ducting comprising two adjacent duct segments with plane variation joined by means of joints according to the known art;
Figures 2a-2d show a joint for cable ductings according to the known art, respectively in an exploded perspective view, in a perspective view from outside the cable ducting in an assembled condition, in a perspective view from inside the cable ducting in an assembled condition, and in a plan rear view in an assembled condition;

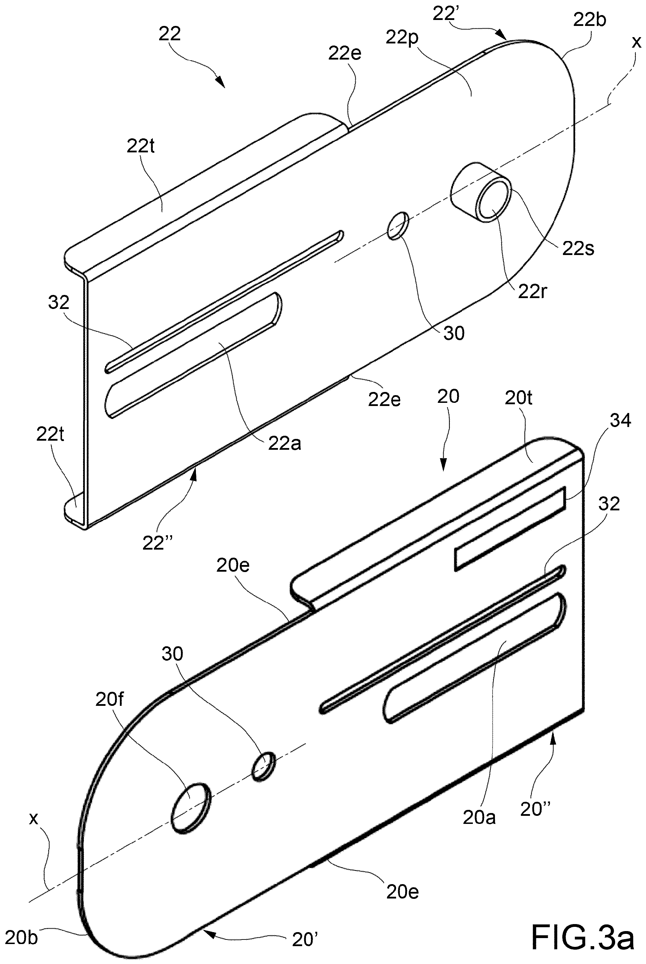

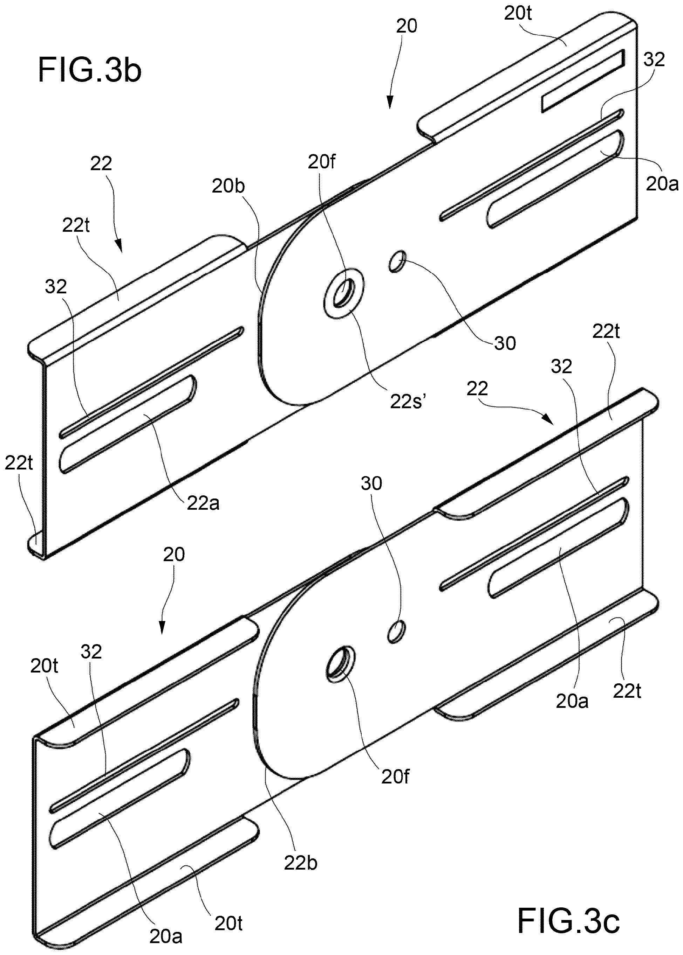

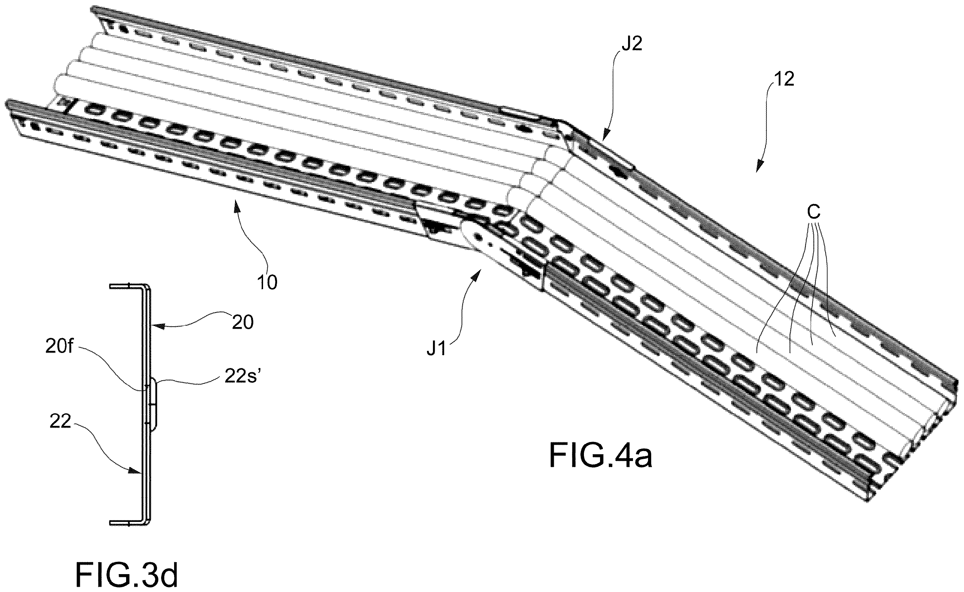

Figures 3a-3d show a joint for cable ductings according to the invention, respectively an exploded perspective view of a first joint element and a second joint element, a perspective view from outside the cable ducting of the joint in an assembled condition, a perspective view from inside the cable ducting of the joint in an assembled condition, and a plan rear view of the joint in an assembled condition;
Figures 4a-4c are respectively a perspective view of part of a cable ducting comprising two adjacent duct segments with plane variation joined by means of joints according to the invention, an enlarged perspective view at a convex plane variation (downward curve) of the ducting and an enlarged perspective view at a concave plane variation (upward curve) of the ducting; and

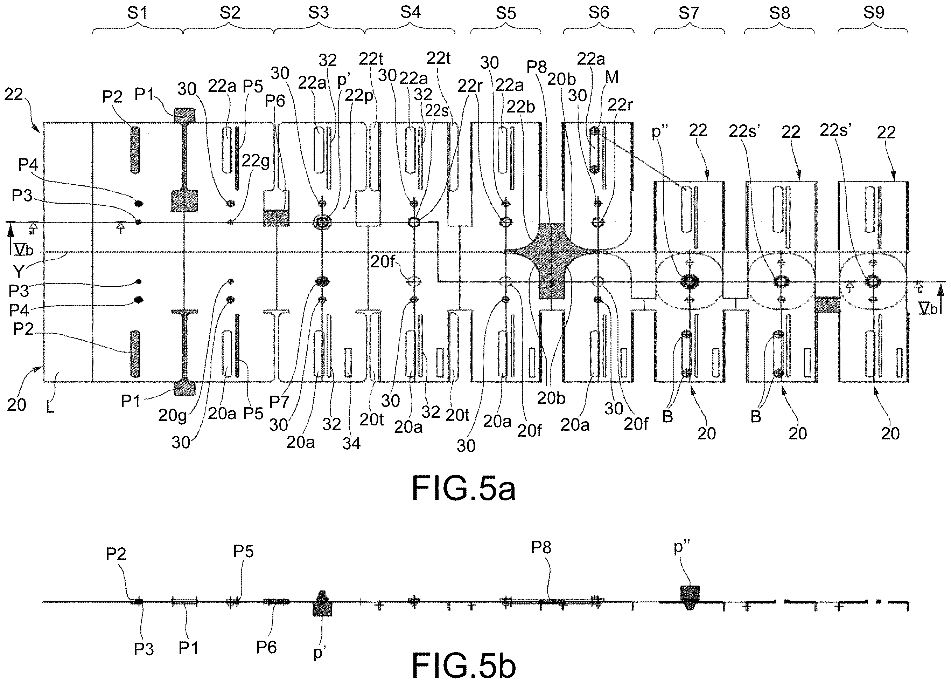

Figures 5a and 5b are respectively a plan view and a side view in cross-section according to the line Vb-Vb, representative of the working stations of a metal sheet for the fabrication of a joint according to the invention.

In Figures 3a-3d and 4a-4c, elements or components identical or functionally equivalent to those illustrated in Figure 1 and 2a-2d are indicated with the same references already used in the description of these preceding figures.

Figure 3a shows details of a first and a second element of the articulated joint of the invention. A first plate element adapted to be operatively coupled to an end portion of a first cable duct is indicated at 20 and a second plate element adapted to be operatively coupled to an end portion of a second cable duct facing said first duct along a predetermined ducting direction is indicated at 22. The first and second plate elements are coupled together rotatably on parallel planes.

Both plate elements have a head portion 20', 22' with a rounded transverse edge 20b, 22b and a tail portion 20", 22" having means for fixing to a cable duct such as an elongated slot 20a, 22a for coupling the element to a side wall of a respective cable duct by removable fixing means such as bolts or the like. Adjacent to each slot 20a, 22a is a respective slit 32 provided for the possible engagement of a tab of an automatic connection joint to the walls of the duct.

Moreover, each plate element 20, 22 comprises in the tail portion 20" and 22" a pair of tabs 20t, 22t extending from at least one part of opposite longitudinal edges 20e, 22e of the element and folded orthogonally to the surface of the element, which are adapted to engage with a side wall or the bottom wall of the end portion of a respective duct segment 10, 12.

In the vicinity of the upper longitudinal edge 22e of the element 22 is obtained a zone 34, for example a rectangular area, for positioning or inscriptions of marks or similar indications.

The plate element 20 has at its head portion 20' a circular through hole 20f formed along a longitudinal center line axis X of the element. The plate element 22 has at its head portion 22' a joining hole with protruding edge 22r, which constitutes an integral raised formation, formed along a longitudinal center line axis X of the element and protruding from a face of the element 22p in a direction orthogonal thereto. In particular, the hole with protruding edge 22r defines a complete cylindrical formation, or a plurality of tooth formations arranged on a cylindrical envelope, which has (have) a radial extension lower than the radial extension of the through hole 20f and the free end edge 22s of which, opposite to the root of the formation on the head portion, protrudes at least partially in a direction orthogonal to the face 22p of the plate element 22.

At least one plate element 20 or 22, and preferably both, have a respective orientation hole 30 longitudinally aligned with the through hole 20f or the hole with protruding edge 22r. In an assembled condition of the duct, where the plate elements 20, 22 of the joint are arranged aligned horizontally or at an angle to each other to produce a convex plane variation (downward curve) or a concave plane variation (upward curve) of the ducting, each orientation hole 30 faces the face of the opposite plate element to allow an operator to place a marking, for example a graphic sign such as a point, on that face to identify a preset mutual angle. Alternatively, the face of the plate element facing the orientation hole has inscriptions representing a set of pre-determined angles of mutual rotation between the first plate element and the second plate element.

As is best shown in Figures 3b-3d in an assembled condition of the plate elements 20, 22, to form the joint, the joining hole with protruding edge 22r is arranged axially through the through hole 20f around an axis of mutual rotation of the elements 20 and 22, so that it emerges with the edge 22s opposite the first plate element 20, and the edge 22s is at least partially folded to form a radially extended flange 22s' at least partially overlapping the edge of the through hole 20f so as to hold the second plate element 22 adjacent to the first plate element 20 in a condition permanently coupled thereto, contrary to that which is described in DE 20 2017 105244 and US 2005/029393 wherein the pins of the articulated connections do not extend radially to overlap the edges of the respective seats and do not contribute to the transverse retention of the plates.

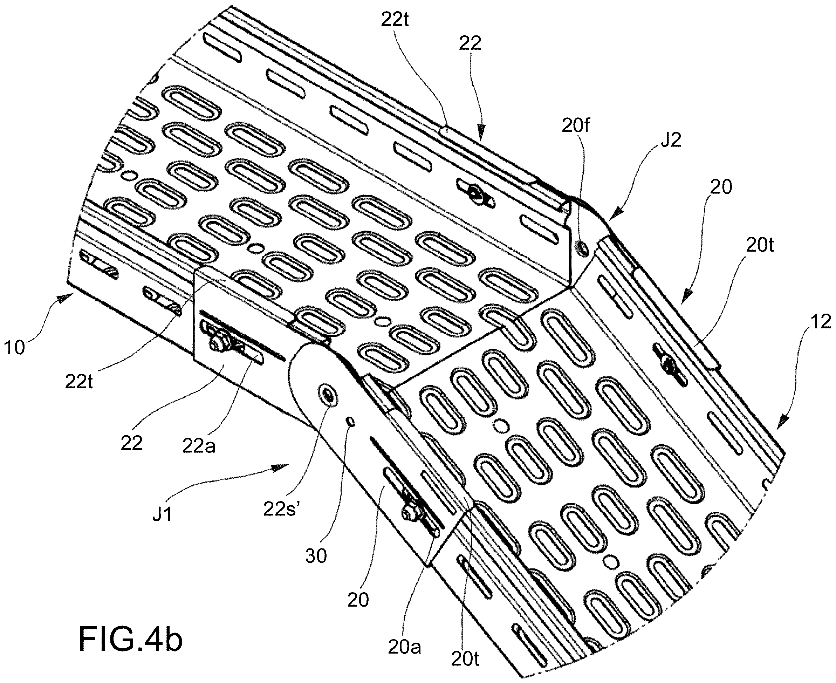

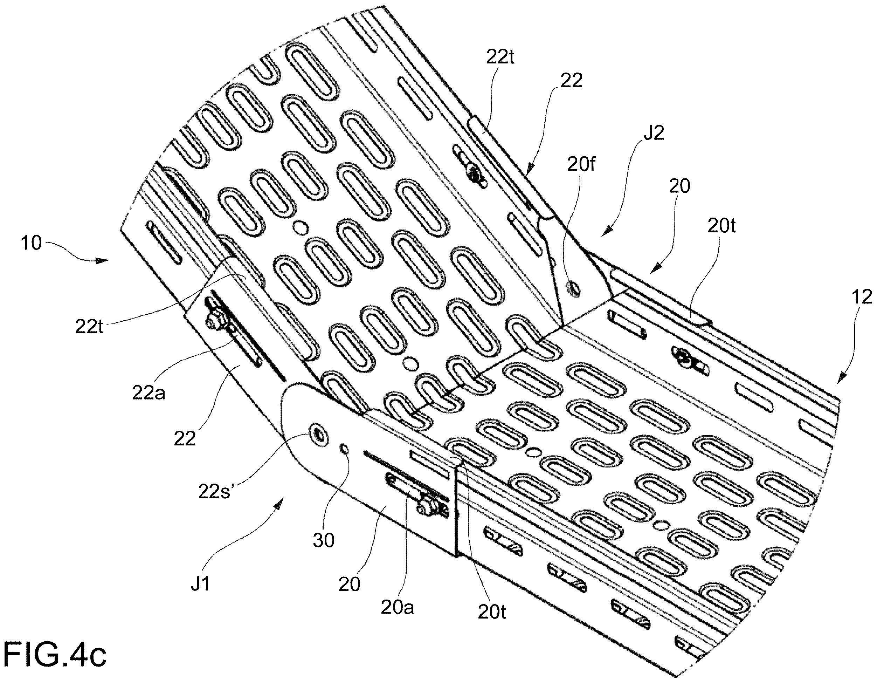

As may be seen in Figures 4a, 4b and 4c - which represent perspective views of part of a cable ducting comprising two adjacent duct segments with plane variation joined by means of joints according to the invention, including an enlarged perspective view at a convex plane variation (downward curve) of the ducting and an enlarged perspective view at a concave plane variation (upward curve) of the ducting - there are no elements protruding from the surface of the joint extending at least partially into the housing space for the cables C within the duct.

With reference to Figures 5a and 5b - which are respectively a plan view and a side view in cross-section according to the line Vb-Vb, representative of the working stations of a metal sheet for the fabrication of a joint according to the invention - a method for the fabrication of a joint for a cable ducting of the type mentioned above is described below.

The joint according to the invention is made by fabricating the first and second plate element 20, 22 in a facing position starting from a single sheet of metallic material L, of which the longitudinal center line axis is indicated at Y, conveyed continuously between successive cold metalworking stations along said Y axis, indicated in the figures at S 1, ..., S9. Advantageously, this makes it possible to fabricate a plurality of joints in succession without having to feed different sheets to the stations S1-S9, and to carry out working in parallel at the different stations.

Figures 5a and 5b show the working stations S1-S9 side by side, according to an illustrative embodiment of an industrial production plant, wherein each station corresponds to a parallel working stage of a different joint. However, for ease of description, the working operations carried out at each station will be described as if they were referring to a single joint, in order to set out in clear, consequential terms the progress of the working of a joint according to the invention. However, it should be understood that the sequence of working described is not necessarily the only possible sequence, and alternative methods may be contemplated by changing the order of the working, for example by reversing the sequence of some working, if this is logically possible.

It is understood that the working method is conducted by means of cold working tools at each station, controlled to perform timed operations, synchronized with the feed of the sheet L, through a control station prepared to implement a predetermined working program.

In a first station S1 and in the following station S2, the first and second plate element 20, 22 are defined on the metal sheet, in a facing position, by means of a pair of first punching dies and blades P1. Specifically, in the first station S1 the punching dies P1 define respectively a first longitudinal edge 20e, 22e of the tail portions 20" and 22" of each plate element and a first tab 20t, 22t extending from a respective first longitudinal edge 20e, 22e. At the same time, in the first station S2 the punching dies P1 define respectively a second longitudinal edge 20e, 22e of the tail portions 20" and 22" of each joint element and a second tab 20t, 22t extending from the respective second longitudinal edge 20e, 22e.

Also in the first station S1, a pair of second punching dies and blades P2 punch the slots 20a, 22a in the tail portions 20" and 22" of each element of the joint, provided for fixing to the duct walls.

In the same station S1, in the head portions 20' and 22' of each element of the joint, at the longitudinal center line axis X, a pair of third punching dies and blades P3 will be used to punch a preparatory guide hole 20g for punching the through hole 20f and a preparatory guide hole 22g for punching the joining hole with protruding edge 22r, and at the same time a pair of fourth punching dies and blades P4 are used to punch the orientation holes 30 in a position longitudinally aligned with the guide holes 20g and 22g.

In the station S2, a pair of fifth punching dies and blades P5 are used to punch respective slits 32 in the tail portions 20" and 22" of each joint element, provided for the possible engagement of a tab of an automatic connection joint to the walls of the duct.

In the stations S2 and S3, a sixth punching die and blade P6 carries out an additional punching for the extension of the longitudinal edges 20e, 22e at the head portion 22' of the plate element 22.

In the station S3, a seventh punching die P7 punches the through hole 20f around the corresponding guide hole 20g, and at the same time an edge forming die P' forms the joining hole with protruding edge 22r by penetrating the guide hole 22g, so as to create a raised formation protruding in a direction orthogonal to the face of the second plate element 22.

In the station S3, the marking of the rectangular area 34 on the element 22 also takes place, for the subsequent inscription of markings.

In the station S4, the pairs of tabs 20t, 22t are folded for example downwards, orthogonally to the surface of the element.

In the station S5 and in the subsequent station S6, the transverse rounded edge 20b, 22b of the head portions 20', 22' of each plate element is defined by means of an eighth punching die and blade P8, the punching contour of which has concavities. The intervention of the die P8 causes the punching of the residual connection areas between the first and second facing elements, whereby is also determined the separation in the longitudinal direction (along the X axis) between the plate element 20 and the plate element 22 and the separation in the transverse direction (along the Y axis of the sheet) between the adjacent plate elements 22.

In the station S6, moving means M, for example a translation carriage, is also engaged within the fixing slot 22a and the second element 22 is translated with respect to the first element 20 to a partial overlapping position, which is represented in the next station S7, wherein the first and second plate element are coupled by means of the arrangement of the joining hole with protruding edge 22r of the second plate element 22 through the through hole 20f of the first plate element 20, whereby the joining hole with protruding edge 22r emerges with its free end on the side opposite to the second element 22.

In the station S7, the joining hole with protruding edge 22r is chamfered or riveted on the face of the plate element 20 by means of a chamfering die P" to form a radially extended flange 22s' overlapping the edge of the through hole 20f, whereby the second plate element 22 is held transversely with respect to the first plate element 20 in a condition permanently coupled thereto. In this station also the engagement of support means B within the fixing slot 20a takes place, whereby - as the support by the sheet L is missing - the newly formed joint is supported by support means B to be translated to the subsequent station S8.

In the station S8 and in the subsequent station S9 the residual connection bridge between the assembled joint and the semi-finished joint coming from the previous stations is punched by means of a ninth punching die and blade P9, so that the joint thereby fabricated is detached at the station S9, and may be taken by subsequent collection means (not shown) for any subsequent working, for example painting, hot-dip galvanizing, surface treatments to ensure corrosion protection.

If a joint is made according to the embodiment wherein the surface of at least one plate element facing the orientation hole of the plate element coupled thereto has inscriptions representative of a set of predetermined angles of mutual rotation between the first plate element and the second plate element, at one of the stations S1-S6, the marking may be provided on a surface of said at least one plate element of said inscriptions representative of a set of predetermined angles of mutual rotation.

Obviously, without prejudice to the principle of the invention, the embodiments and the details of implementation may be greatly modified with respect to those described and illustrated purely by way of non-limiting example, without thereby departing from the scope of protection of the invention as defined in the accompanying claims.

## Claims

1. Joint (J1; J2) for a cable ducting including a first plate element (20) adapted to be operatively coupled to an end portion of a first cable duct (12) and a second plate element (22) adapted to be operatively coupled to an end portion of a second cable duct (10) facing said first duct (12) along a predetermined ducting direction, wherein said first plate element (20) and said second plate element (22) are rotatably coupled to each other on parallel planes, wherein said first plate element (20) comprises a through hole (20f) and said second plate element (22) comprises an integral raised formation (22r), protruding from a face (22p) of said second plate element in a direction orthogonal to said face (22p), said raised formation (22r) being disposed through said through hole (20f) so as to emerge with a free end (22s) from the opposite side and to determine an axis of mutual rotation of said plate elements (20, 22), said free end having a flange (22s') extending radially at least partially overlapping to an edge of said through hole (20f) so as to retain said second plate element (22) transversely with respect to said first plate element (20) in a condition firmly coupled thereto,
**characterized in that** said through hole (20f) is a circular hole forming a rotation hinge and said integral raised formation (22r) comprises a joining hole with protruding edge having a radial extension smaller than the radial extension of said through hole (20f) and an edge (22s) at least partially protruding in said direction orthogonal to the face (22p) of the second plate element (22), said at least partially protruding edge (22s) being at least partially folded to form said flange (22s') so as to hold the second plate element (22) adjacent to the first plate element (20).

2. Joint according to claim 1, wherein said through hole (20f) and said raised formation (22r) are formed along a longitudinal center line axis (X) of said first and second plate element (20; 22), respectively.

3. Joint according to any one of the preceding claims, wherein at least one plate element (20; 22) has an orientation hole (30) longitudinally aligned with said through hole (20f) or with said raised formation (22r).

4. Joint according to claim 3, wherein the face of the other plate element facing said orientation hole (30) has markings representing a set of pre-determined angles of mutual rotation between said first plate element (20) and said second plate element (22).

5. Joint according to any one of the preceding claims, wherein each plate element (20; 22) comprises a pair of tabs (20t; 22t) extending from at least one part of opposite longitudinal edges (20e; 22e) of the element and folded orthogonally to the surface of the element.

6. Joint according to any one of the preceding claims, wherein each plate element (20; 22) defines a head portion (20'; 22') having said through hole (20f) or said integral raised formation (22r) and a tail portion (20"; 22") having fixing means (20a; 22a) to a cable duct (12; 10), and the head portion (20'; 22') has a rounded transverse edge (20b; 22b).

7. Joint according to any one of the preceding claims, wherein each plate element (20; 22) comprises an elongated slot (20a; 22a) for fixing to a side wall of a respective cable duct (12; 10).

8. Method for the fabrication of a joint (J1; J2) for a cable ducting according to claims 1-7, comprising a first plate element (20) adapted to be operatively coupled to an end portion of a first cable duct (12) and a second plate element (22) adapted to be operatively coupled to an end portion of a second cable duct (10) facing said first duct (12) along a predetermined ducting direction, wherein said first plate element (20) and said second plate element (22) are rotatably coupled to each other on parallel planes, wherein the method for the fabrication comprises the following operations:
- defining said first and second plate element (20; 22) on at least one metal sheet (L);
- in a head portion (20') of said first plate element (20) along a longitudinal center line axis (X) of said element, punching a through hole (20f);
- in a head portion (22') of said second plate element (22) along a longitudinal center line axis (X) of said element, molding of a raised formation (22r) integral with said at least one metal sheet (L) and protruding in a direction orthogonal to the face (22p) of said second plate element (22);
- coupling said first and said second plate element (20; 22) by arrangement of said raised formation (22r) of the second plate element (22) through said through hole (20f) of the first plate element (20) so as to emerge with a free end (22s) from the opposite side and determine an axis of mutual rotation of said elements; and
- riveting said raised formation (22r) at the free end (22s) to form a flange (22s') extending radially overlapping an edge of said through hole (20f) so as to retain said second element plate (22) transversely with respect to said first plate element (20) in a condition firmly coupled thereto.

9. The method according to claim 8, in which said molding of a raised formation (22r) comprises punching and forming a protruding edge in a joining hole having a radial extension smaller than the radial extension of the said through hole (20f), so as to form an edge (22s) at least partially protruding in a direction orthogonal to the face (22p) of the second plate element (22).

10. The method according to claim 9, wherein said punching of a through hole (20f) and said punching and forming of a joining hole with protruding edge (22r) are carried out simultaneously.

11. The method according to claim 8, wherein said first and second plate elements (20; 22) are defined on a single metal sheet (L), in facing positions.

12. The method according to claim 11, comprising punching residual connection areas between said first and second facing plate elements (20; 22), detaching said first and second plate elements (20; 22) and translating one of said first and second plate elements with respect to the other up to a superimposed position of alignment between said raised formation (22r) and said through hole (20f).

13. The method according to claim 12, comprising punching in each of said first and second plate element (20; 22) an elongated slot (20a; 22a) for fixing to a side wall of a respective cable duct (12; 10) and translating said at least one of said first and second plate element (20; 22) with respect to the other through moving means (M) temporarily engaged within said fixing slot (22a).

14. The method according to claim 9, comprising punching a guide hole for punching said through hole (20f) or a guide hole for punching said joining hole with protruding edge (22r) simultaneously with the punching of an orientation hole (30) longitudinally aligned with said through hole (20f) or with said joining hole with protruding edge (22r).

15. The method according to any one of claims 8 to 14, comprising in each plate element (20; 22) the folding of a pair of tabs (20t; 22t) extending from at least a part of opposite longitudinal edges (20e; 22e) of the element, orthogonally to the surface of the element.

16. The method according to any one of claims 8 to 15, comprising marking on a surface of at least one plate element (20; 22) inscriptions representing a set of predetermined angles of mutual rotation between said first plate element (20) and said second plate element (22).

17. The method according to any one of claims 8 to 16, comprising in a head portion (20'; 22') of each plate element (20; 22) the punching of a rounded transverse edge (20b; 22b).

18. The method according to any one of claims 8 to 17, comprising executing the claimed operations on a single sheet (L) conveyed between successive cold metalworking stations (S1-S9) and the separation of an assembled joint comprising a first plate element (20) and a second plate element (22) rotatably coupled to each other on parallel planes by a semi-finished joint by cutting a residual connection bridge between said assembled joint and said semi-finished joint.

## Patentansprüche

1. Verbindungsstück (J1; J2) für eine Kabelführung, aufweisend ein erstes Plattenelement (20), das eingerichtet ist, mit einem Endabschnitt einer ersten Kabelführung (12) wirkverbunden zu werden, und ein zweites Plattenelement (22), das eingerichtet ist, mit einem Endabschnitt einer zweiten Kabelführung (10), die der ersten Führung (12) entlang einer vorbestimmten Führungsrichtung gegenüberliegt, wirkverbunden zu werden, wobei das erste Plattenelement (20) und das zweite Plattenelement (22) auf parallelen Ebenen drehbar miteinander gekoppelt sind, wobei das erste Plattenelement (20) ein Durchgangsloch (20f) aufweist und das zweite Plattenelement (22) eine integrale erhöhte Formation (22r) aufweist, die von einer Fläche (22p) des zweiten Plattenelements in einer Richtung orthogonal zu der Fläche (22p) vorsteht, wobei die erhöhte Formation (22r) derart durch das Durchgangsloch (20f) angeordnet ist, dass sie mit einem freien Ende (22s) von der gegenüberliegenden Seite austritt und eine Achse gegenseitiger Drehung der Plattenelemente (20, 22) bestimmt, wobei das freie Ende einen Flansch (22s') aufweist, der sich radial zumindest teilweise überlappend zu einer Kante des Durchgangslochs (20f) erstreckt, um das zweite Plattenelement (22) quer in Bezug auf des erste Plattenelement (20) in einem fest damit gekoppelten Zustand zu halten,
**dadurch gekennzeichnet, dass** das Durchgangsloch (20f) ein kreisförmiges Loch ist, das ein Drehscharnier bildet, und die integrale erhöhte Formation (22r) ein Verbindungsloch mit einer vorstehenden Kante, die eine radiale Ausdehnung hat, die kleiner als die radiale Ausdehnung des Durchgangslochs (20f) ist, und einer Kante (22s) aufweist, die zumindest teilweise in der Richtung orthogonal zu der Fläche (22p) des zweiten Plattenelements (22) vorsteht, wobei die zumindest teilweise vorstehende Kante (22s) zumindest teilweise gefaltet ist, um den Flansch (22s') zu bilden, um das zweite Plattenelement (22) angrenzend an das erste Plattenelement (20) zu halten.

2. Verbindungsstück nach Anspruch 1, wobei das Durchgangsloch (20f) und die erhöhte Formation (22r) jeweils entlang einer Längsmittellinienachse (X) des ersten und zweiten Plattenelements (20; 22) ausgebildet sind.

3. Verbindungsstück nach einem der vorstehenden Ansprüche, wobei zumindest ein Plattenelement (20; 22) ein Ausrichtungsloch (30) aufweist, das in Längsrichtung mit dem Durchgangsloch (20f) oder mit der erhöhten Formation (22r) ausgerichtet ist.

4. Verbindungsstück nach Anspruch 3, wobei die Fläche des anderen Plattenelements, die dem Ausrichtungsloch (30) gegenüberliegt, Markierungen aufweist, die einen Satz von vorbestimmten Winkeln gegenseitiger Drehung zwischen dem ersten Plattenelement (20) und dem zweiten Plattenelement (22) darstellen.

5. Verbindungsstück nach einem der vorstehenden Ansprüche, wobei jedes Plattenelement (20; 22) ein Paar Laschen (20t; 22t) aufweist, die sich von zumindest einem Teil der gegenüberliegenden Längskanten (20e; 22e) des Elements erstrecken und orthogonal zu der Oberfläche des Elements gefaltet sind.

6. Verbindungsstück nach einem der vorstehenden Ansprüche, wobei jedes Plattenelement (20; 22) einen Kopfabschnitt (20'; 22') mit dem Durchgangsloch (20f) oder der integralen erhöhten Formation (22r) und einen Endabschnitt (20"; 22") mit Fixiermitteln (20a; 22a) an eine Kabelführung (12; 10) definiert, und der Kopfabschnitt (20'; 22') eine abgerundete Querkante (20b; 22b) aufweist.

7. Verbindungsstück nach einem der vorstehenden Ansprüche, wobei jedes Plattenelement (20; 22) einen länglichen Schlitz (20a; 22a) zum Fixieren an einer Seitenwand einer jeweiligen Kabelführung (12; 10) aufweist.

8. Verfahren zum Herstellen eines Verbindungsstücks (J1; J2) für eine Kabelführung nach einem der Ansprüche 1 bis 7, aufweisend ein erstes Plattenelement (20), das eingerichtet ist, mit einem Endabschnitt einer ersten Kabelführung (12) wirkverbunden zu werden, und ein zweites Plattenelement (22), das eingerichtet ist, mit einem Endabschnitt einer zweiten Kabelführung (10), die der ersten Führung (12) entlang einer vorbestimmten Führungsrichtung gegenüberliegt, wirkverbunden zu werden, wobei das erste Plattenelement (20) und das zweite Plattenelement (22) auf parallelen Ebenen drehbar miteinander gekoppelt sind, wobei das Verfahren zum Herstellen die folgenden Vorgänge umfasst:
- Definieren des ersten und zweiten Plattenelements (20; 22) auf zumindest einem Metallblech (L);
- Stanzen, in einem Kopfabschnitt (20') des ersten Plattenelements (20) entlang einer Längsmittellinienachse (X) des Elements, eines Durchgangslochs (20f);
- Formen, in einem Kopfabschnitt (22') des zweiten Plattenelements (22) entlang einer Längsmittellinienachse (X) des Elements, einer erhöhten Formation (22r), die mit dem zumindest einen Metallblech (L) integral ist und in einer Richtung orthogonal zu der Fläche (22p) des zweiten Plattenelements (22) vorsteht;
- Koppeln des ersten und des zweiten Plattenelements (20; 22) durch Anordnung der erhöhten Formation (22r) des zweiten Plattenelements (22) durch das Durchgangsloch (20f) des ersten Plattenelements (20), um mit einem freien Ende (22s) aus der gegenüberliegenden Seite auszutreten und eine Achse gegenseitiger Drehung der Elemente zu bestimmen; und
- Vernieten der erhöhten Formation (22r) an dem freien Ende (22s), um einen Flansch (22s') zu bilden, der sich radial überlappend über eine Kante des Durchgangslochs (20f) erstreckt, um die zweite Elementplatte (22) quer in Bezug auf das erste Plattenelement (20) in einem fest damit gekoppelten Zustand zu halten.

9. Verfahren nach Anspruch 8, bei dem das Formen einer erhöhten Formation (22r) das Stanzen und Bilden einer vorstehenden Kante in einem Verbindungsloch mit einer radialen Ausdehnung umfasst, die kleiner als die radiale Ausdehnung des Durchgangslochs (20f) ist, um eine Kante (22s) zu bilden, die zumindest teilweise in einer Richtung orthogonal zu der Fläche (22p) des zweiten Plattenelements (22) vorsteht.

10. Verfahren nach Anspruch 9, wobei das Stanzen eines Durchgangslochs (20f) und das Stanzen und Bilden eines Verbindungslochs mit vorstehender Kante (22r) gleichzeitig durchgeführt werden.

11. Verfahren nach Anspruch 8, wobei die ersten und zweiten Plattenelemente (20; 22) auf einem einzelnen Metallblech (L) in gegenüberliegenden Positionen definiert werden.

12. Verfahren nach Anspruch 11, umfassend das Stanzen von Restverbindungsbereichen zwischen den ersten und zweiten gegenüberliegenden Plattenelementen (20; 22), das Lösen der ersten und zweiten Plattenelemente (20; 22) und das Verschieben eines der ersten und zweiten Plattenelemente in Bezug auf das andere bis zu einer überlagerten Position der Ausrichtung zwischen der erhöhten Formation (22r) und dem Durchgangsloch (20f).

13. Verfahren nach Anspruch 12, umfassend das Stanzen eines länglichen Schlitzes (20a; 22a) in jedes der ersten und zweiten Plattenelemente (20; 22) zum Fixieren an einer Seitenwand einer jeweiligen Kabelführung (12; 10) und das Verschieben des zumindest einen der ersten und zweiten Plattenelemente (20; 22) in Bezug auf das andere durch Bewegungsmittel (M), die vorübergehend in den Fixierschlitz (22a) eingreifen.

14. Verfahren nach Anspruch 9, umfassend das Stanzen eines Führungslochs zum Stanzen des Durchgangslochs (20f) oder eines Führungslochs zum Stanzen des Verbindungslochs mit vorstehender Kante (22r) gleichzeitig mit dem Stanzen eines Ausrichtungslochs (30), das in Längsrichtung mit dem Durchgangsloch (20f) oder mit dem Verbindungsloch mit vorstehender Kante (22r) ausgerichtet ist.

15. Verfahren nach einem der Ansprüche 8 bis 14, umfassend in jedem Plattenelement (20; 22) das Falten eines Paares von Laschen (20t; 22t), die sich von zumindest einem Teil der gegenüberliegenden Längskanten (20e; 22e) des Elements orthogonal zu der Oberfläche des Elements erstrecken.

16. Verfahren nach einem der Ansprüche 8 bis 15, umfassend das Markieren von Beschriftungen auf einer Oberfläche von zumindest einem Plattenelement (20; 22), die einen Satz von vorbestimmten Winkeln gegenseitiger Drehung zwischen dem ersten Plattenelement (20) und dem zweiten Plattenelement (22) darstellen.

17. Verfahren nach einem der Ansprüche 8 bis 16, umfassend das Stanzen einer abgerundeten Querkante (20b; 22b) in einem Kopfabschnitt (20'; 22') eines jeden Plattenelements (20; 22).

18. Verfahren nach einem der Ansprüche 8 bis 17, umfassend das Durchführen der beanspruchten Vorgänge an einem einzelnen Blech (L), das zwischen aufeinanderfolgenden kalten Metallbearbeitungsstationen (S1-S9) befördert wird, und die Trennung eines montierten Verbindungsstücks, umfassend ein erstes Plattenelement (20) und ein zweites Plattenelement (22), die auf parallelen Ebenen drehbar miteinander durch ein halbfertiges Verbindungsstück durch Schneiden einer Restverbindungsbrücke zwischen dem montierten Verbindungsstück und dem halbfertigen Verbindungsstück gekoppelt sind.

## Revendications

1. Joint (J1 ; J2) pour goulotte de câbles comportant un premier élément en plaque (20) adapté pour être accouplé fonctionnellement à une portion d'extrémité d'une première goulotte (12) de câble et un second élément en plaque (22) adapté pour être accouplé fonctionnellement à une portion d'extrémité d'une seconde goulotte de câbles (10) faisant face à ladite première goulotte (12) le long d'une direction de goulotte prédéterminée, dans lequel ledit premier élément en plaque (20) et ledit second élément en plaque (22) sont accouplés l'un à l'autre de façon à pouvoir pivoter sur des plans parallèles, dans lequel ledit premier élément en plaque (20) comprend un trou débouchant (20f) et ledit second élément en plaque (22) comprend une formation intégrée en relief (22r), faisant saillie à partir d'une face (22p) dudit second élément en plaque dans une direction orthogonale à ladite face (22p), ladite formation en relief (22r) étant disposée à travers ledit trou débouchant (20f) de manière à émerger avec une extrémité libre (22s) depuis le côté opposé et à déterminer un axe de rotation mutuelle desdits éléments en plaque (20, 22), ladite extrémité libre ayant une collerette (22s') s'étendant radialement en chevauchant au moins partiellement un bord dudit trou débouchant (20f) de manière à retenir ledit second élément en plaque (22) transversalement par rapport audit premier élément en plaque (20) dans un état accouplé solidement à celui-ci,
**caractérisé en ce que** ledit trou débouchant (20f) est un trou circulaire formant une charnière à rotation et ladite formation intégrée en relief (22r) comprend un trou de jonction avec un bord faisant saillie qui présente une extension radiale plus petite que l'extension radiale dudit trou débouchant (20f) et un bord (22s) faisant saillie au moins partiellement dans ladite direction orthogonale à la face (22p) du second élément en plaque (22), ledit bord (22s) faisant saillie au moins partiellement étant au moins partiellement replié pour former ladite collerette (22s') de manière à maintenir le second élément en plaque (22) adjacent au premier élément en plaque (20).

2. Joint selon la revendication 1, dans lequel ledit trou débouchant (20f) et ladite formation en relief (22r) sont formés le long d'un axe de ligne centrale longitudinale (X) desdits premier et second éléments en plaques (20 ; 22), respectivement.

3. Joint selon l'une quelconque des revendications précédentes, dans lequel au moins un élément en plaque (20 ; 22) a un trou d'orientation (30) aligné longitudinalement sur ledit trou débouchant (20f) ou sur ladite formation en relief (22r).

4. Joint selon la revendication 3, dans lequel la face de l'autre élément en plaque faisant face audit trou d'orientation (30) présente des marquages représentant une série d'angles prédéterminés de rotation mutuelle entre ledit premier élément en plaque (20) et ledit second élément en plaque (22).

5. Joint selon l'une quelconque des revendications précédentes, dans lequel chaque élément en plaque (20 ; 22) comprend une paire d'ailettes (20t ; 22t) s'étendant depuis au moins une partie de bords longitudinaux opposés (20e ; 22e) de l'élément et repliées orthogonalement à la surface de l'élément.

6. Joint selon l'une quelconque des revendications précédentes, dans lequel chaque élément en plaque (20 ; 22) définit une portion de tête (20' ; 22') ayant ledit trou débouchant (20f) ou ladite formation intégrée en relief (22r) et une portion de queue (20" ; 22") comportant des moyens de fixation (20a ; 22a) à une goulotte de câbles (12 ; 10), la portion de tête (20' ; 22') présentant un bord transversal arrondi (20b ; 22b).

7. Joint selon l'une quelconque des revendications précédentes, dans lequel chaque élément en plaque (20 ; 22) comprend une fente allongée (20a ; 22a) destinée à être fixée à une paroi latérale d'une goulotte de câbles (12 ; 10) respective.

8. Procédé de fabrication d'un joint (J1 ; J2) pour goulotte de câbles selon les revendications 1 à 7, comprenant un premier élément en plaque (20) adapté pour être accouplé fonctionnellement à une portion d'extrémité d'une première goulotte de câbles (12) et un second élément en plaque (22) adapté pour être accouplé fonctionnellement à une portion d'extrémité d'une seconde goulotte de câbles (10) faisant face à ladite première goulotte (12) le long d'une direction de goulotte prédéterminée, dans lequel ledit premier élément en plaque (20) et ledit second élément en plaque (22) sont accouplés l'un à l'autre de façon à pouvoir pivoter sur des plans parallèles, le procédé de fabrication comprenant les opérations suivantes :
- la définition desdits premier et second éléments en plaques (20 ; 22) sur au moins une feuille métallique (L) ;
- dans une portion de tête (20') dudit premier élément en plaque (20), le long d'un axe de ligne centrale longitudinale (X) dudit élément, le poinçonnage d'un trou débouchant (20f) ;
- dans une portion de tête (22') dudit second élément en plaque (22), le long d'un axe de ligne centrale longitudinale (X) dudit élément, le moulage d'une formation en relief (22r) intégrée à ladite feuille métallique (L), au moins au nombre de une, et faisant saillie dans une direction orthogonale à la face (22p) dudit second élément en plaque (22) ;
- l'accouplement desdits premier et second éléments en plaque (20 ; 22) par un agencement de ladite formation en relief (22r) du second élément en plaque (22) à travers ledit trou débouchant (20f) du premier élément en plaque (20) de manière à émerger avec une extrémité libre (22s) depuis le côté opposé et déterminer un axe de rotation mutuelle desdits éléments ; et
- le rivetage de ladite formation en relief (22r) au niveau de l'extrémité libre (22s) pour former une collerette (22s') s'étendant radialement en chevauchant un bord dudit trou débouchant (20f) de manière à retenir ledit second élément en plaque (22) transversalement par rapport audit premier élément en plaque (20), dans un état accouplé solidement à celui-ci.

9. Procédé selon la revendication 8, dans lequel ledit moulage d'une formation en relief (22r) comprend le poinçonnage et la formation d'un bord faisant saillie dans un trou de jonction ayant une extension radiale plus petite que l'extension radiale dudit trou débouchant (20f), de manière à former un bord (22s) faisant saillie au moins partiellement dans une direction orthogonale à la face (22p) du second élément en plaque (22).

10. Procédé selon la revendication 9, dans lequel ledit poinçonnage d'un trou débouchant (20f) et lesdits poinçonnage et formation d'un trou de jonction avec un bord faisant saillie (22r) sont effectués simultanément.

11. Procédé selon la revendication 8, dans lequel lesdits premier et second éléments en plaques (20 ; 22) sont définis sur une feuille métallique (L) unique, dans des positions se faisant face.

12. Procédé selon la revendication 11, comprenant le poinçonnage de zones de liaison restantes entre lesdits premier et second éléments en plaques (20 ; 22) se faisant face, la dissociation desdits premier et second éléments en plaques (20 ; 22) et la translation de l'un desdits premier et second éléments en plaques l'un par rapport à l'autre jusqu'à une position superposée d'alignement entre ladite formation surélevée (22r) et ledit trou débouchant (20f).

13. Procédé selon la revendication 12, comprenant le poinçonnage dans chacun desdits premier et second éléments en plaques (20 ; 22) d'une fente allongée (20a ; 22a) destinée à être fixée à une paroi latérale d'une goulotte (12 ; 10) de câble respective et la translation l'un par rapport à l'autre de l'un au moins parmi lesdits premier et second éléments en plaques (20 ; 22) par le biais de moyens de déplacement (M) temporairement engagés dans ladite fente de fixation (22a).

14. Procédé selon la revendication 9, comprenant le poinçonnage d'un trou de guidage pour poinçonner ledit trou débouchant (20f) ou d'un trou de guidage pour poinçonner ledit trou de jonction avec un bord faisant saillie (22r) simultanément avec le poinçonnage d'un trou d'orientation (30) aligné longitudinalement sur ledit trou débouchant (20f) ou sur ledit trou de jonction avec un bord faisant saillie (22r).

15. Procédé selon l'une quelconque des revendications 8 à 14, comprenant dans chaque élément en plaque (20 ; 22) le pliage d'une paire d'ailettes (20t ; 22t) s'étendant depuis au moins une partie de bords longitudinaux opposés (20e ; 22e) de l'élément, orthogonalement à la surface de l'élément.

16. Procédé selon l'une quelconque des revendications 8 à 15, comprenant le marquage sur une surface d'au moins un élément en plaque (20 ; 22) d'inscriptions représentant une série d'angles prédéterminés de rotation mutuelle entre ledit premier élément en plaque (20) et ledit second élément en plaque (22).

17. Procédé selon l'une quelconque des revendications 8 à 16, comprenant dans une portion de tête (20' ; 22') de chaque élément en plaque (20 ; 22) le poinçonnage d'un bord transversal arrondi (20b ; 22b).

18. Procédé selon l'une quelconque des revendications 8 à 17, comprenant l'exécution des opérations ci-dessus sur une feuille (L) unique transportée entre des postes de travail des métaux à froid (S1-S9) successifs et la séparation d'un joint assemblé comprenant un premier élément en plaque (20) et un second élément en plaque (22) accouplés l'un à l'autre de façon à pouvoir pivoter sur des plans parallèles par un joint semi-fini en coupant un pont de liaison restant entre ledit joint assemblé et ledit joint semi-fini.
